# EUROPÄISCHE PATENTANMELDUNG

(11) **EP 1 970 352 A1**
(43) Veröffentlichungstag der Anmeldung: **17.09.2008**
(21) Anmeldenummer: 07104165.1
(22) Anmeldetag: 14.03.2007
(51) Int. Cl.: C02F 1/52, G05D 11/13, G05B 13/02

(54) **Verfahren zur Optimierung der Zugabemenge von Zusätzen bei der Behandlung von Fluiden**

(71) Anmelder: ARU Anlagen für Recycling und Umwelschutz, 66763 Dillingen (DE)
(72) Erfinder: Biegel, Johannes, 66763, Dillingen (DE)
(74) Vertreter: Fuchs

(57) **Zusammenfassung**

Die Erfindung betrifft ein Verfahren zur Steuerung der optimalen Dosiermenge Dₒₚₜ. bei dem zu Beginn des Verfahrens der Steuerung vorgegeben wird, ob der maximale bzw. der minimale Messwert Mₘₐₓ bzw. Mₘᵢₙ als Richtwert R_{M} = f(R_{D}) für die optimale Dosiermenge Dₒₚₜ= R_{D} zugrunde gelegt werden soll und mit einer Dosiermenge S_{D} = D_{O} gestartet und der erste zugehörige Startmesswert S_{M} = M_{O} aufgenommen wird und eine erste Dosiermengenänderung ΔDᵢ und die Analyse der durch diese Dosiermengenänderung induzierten Messwertänderung ΔMᵢ vorgenommen wird und das Ergebnis der Analyse dieser Messwertänderung über die weitere Vorgehensweise entscheidet und die Dosiermenge D periodisch im Abstand einer vorgebbaren Taktzeit Δtᵢ um eine vorgebbare Dosiermengenänderung ΔD; verändert wird, wobei eine Toleranz Tᵢ vorgegeben wird und in dem Fall, dass der Betrag der Messwertänderung |ΔMᵢ| < Tᵢ ist, die folgende Dosiermengenänderung ΔDᵢ₊₁ < 0 ist und falls Mₘₐₓ als Richtwert R_{M} = f (R_{D}) zugrunde gelegt wird, bei einer positiven Messwertänderung ΔMᵢ der folgenden vorzunehmenden Dosiermengenänderung ΔDᵢ₊₁ das gleiche Vorzeichen zugeordnet wird wie der vorherigen Dosiermengenänderung ΔDᵢ und falls Mₘᵢₙ als Richtwert R_{M} = f (R_{D}) zugrunde gelegt wird, bei einer negativen Messwertänderung ΔMᵢ der folgenden vorzunehmenden Dosiermengenänderung ΔDᵢ₊₁ das gleiche Vorzeichen zugeordnet wird wie der vorherigen Dosiermengenänderung ΔD_{i,} wobei
- Mₘₐₓ als Richtwert R_{M} = f (R_{D}) zugrunde gelegt wird, bei einer negativen Messwertänderung ΔMᵢ oder einer Messwertänderung ΔMᵢ = 0, der folgenden vorzunehmenden Dosiermengenänderung ΔDᵢ₊₁ das entgegengesetzte Vorzeichen zugeordnet wird wie der vorherigen Dosiermengenänderung ΔDᵢ,
- Mₘᵢₙ, als Richtwert R_{M} = f (R_{D}) zugrunde gelegt wird, bei einer positiven Messwertänderung ΔMᵢ oder einer Messwertänderung ΔMᵢ = 0, der folgenden vorzunehmenden Dosiermengenänderung ΔDᵢ₊₁ das entgegengesetzte Vorzeichen zugeordnet wird wie der vorherigen Dosiermengenänderung ΔDᵢ,
- die periodische Abarbeitung der Algorithmen des Verfahrens wahlweise bei Erreichung bestimmter Unterbrechungskriterien unterbrochen werden kann, nämlich wenn unzulässig hohe, vorgebbare absolute Messwertebeträge |Mₘₐₓ| auftreten und/oder eine Messwertänderung ΔM unzulässige, vorgebbare Werte überschreitet und/oder eine vorgebbare Anzahl gleichgerichteter Dosierschritte überschritten wird und/oder eine vorgebbare Anzahl der Richtungsumkehren der Dosierschritte überschritten wird und/oder die Dosiermengengrenzen Dₘᵢₙ und/oder Dₘₐₓ erreicht werden, und
- nach der Unterbrechung der periodischen Algorithmen einer oder mehrere der Parameter Startdosiermenge D_{Start}, Dosierschrittweite ΔDᵢ, maximale Dosiermenge Dₘₐₓ, minimale Dosiermenge Dₘᵢₙ, Taktzeit Δtᵢ, Toleranz Tᵢ geändert werden können (nicht-periodische Abarbeitung) und
- die periodische Abarbeitung an beliebiger Stelle wieder fortgeführt werden kann und/oder
- die periodische Abarbeitung beendet werden kann.

## Beschreibung

Die Erfindung betrifft ein Verfahren zur Optimierung der Zugabemenge Dₒₚₜ von Aufbereitungschemikalien bei der Behandlung von kontinuierlich strömenden, zu behandelnden Fluiden.

Beispiele für die Zugabe von Aufbereitungschemikalien sind die Behandlung von wässrigen Phasen aus Großwäschereien, Papierfabriken, Lebensmittelbetrieben, Chemiefabriken und Kläranlagen mit Fällungsmitteln, Flockungs- bzw. Flockungshilfsmitteln und organischen/anorganischen Demulgatoren.

Ziel der Chemikalienzugabe ist es, Inhaltsstoffe die nicht oder nur schwer abtrennbar sind, in eine physikalisch gut abtrennbare Form zu überführen. Anschließend lassen sich die Inhaltsstoffe z.B. mit den Verfahren der Sedimentation, der Filtration, der Zentrifugierung etc. als verwertbare, verbrennbare oder deponierbare Reststoffphase abtrennen. Der Aufbereitungserfolg der allermeisten chemisch/physikalischen Behandlungsverfahren wird entscheidend von der bedarfsgerechten Dosierung der Aufbereitungschemikalien - z. B. abhängig von der Konzentration der zugeführten Inhalts- bzw. Begleitstoffe - beeinflusst. Da die Eigenschaften der zulaufenden Phase deutlichen Schwankungen unterliegen können, muss die Dosiermenge häufig verstellt werden, um eine möglichst optimale Aufbereitung zu gewährleisten. Nach dem Stand der Technik erfolgt die Verstellung der Dosiermenge bei der kontinuierlichen Aufbereitung von Fluiden überwiegend von Hand, zunehmend jedoch auch geregelt oder mit dem in EP 00 943 723.7 beschriebenen Verfahren. Bei dem in EP 00 943 723.7 beschriebenen Verfahren handelt es sich um ein selbstkalibrierendes Verfahren zur Steuerung der optimalen Dosiermenge Dₒₚₜ von Aufbereitungschemikalien.

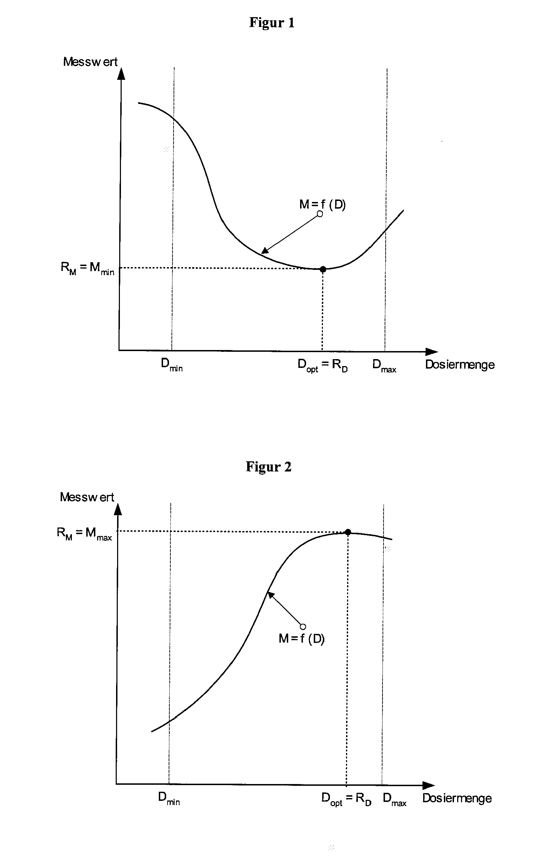

Es wird eine bestimmte Eigenschaft der Fluid/Chemikalienmischung mittels einer geeigneten Messtechnik kontinuierlich überwacht. Die Dosiermenge Dᵢ und ein ermittelter, korrespondierender Messwert Mᵢ müssen innerhalb festzulegender Dosiergrenzen Dₘₐₓ und Dₘᵢₙ einen für den jeweiligen Anwendungsfall charakteristischen funktionalen Zusammenhang aufweisen; die so genannte Messwertfunktion M = f(D). Die Messwertfunktion weist innerhalb dieser Dosiergrenzen Dₘₐₓ und Dₘᵢₙ einen maximalen und einen minimalen Messwert Mₘₐₓ und Mₘᵢₙ auf. Zu Beginn des Verfahrens wird der Steuerung vorgegeben, ob der maximale bzw. der minimale Messwert Mₘₐₓ bzw. Mₘᵢₙ als Richtwert R_{M} = f(R_{D}) für die optimale Dosiermenge Dₒₚₜ = R_{D} zugrunde gelegt werden soll. Bei der in Figur 1 beispielhaft dargestellten Messwertfunktion wird der minimale Messwert Mₘᵢₙ als Richtwert R_{M} zugrunde gelegt, in Figur 2 wird der maximale Messwert Mₘₐₓ als Richtwert zugrunde gelegt.

Das Verfahren wird mit einer Dosiermenge S_{D} = D_{O} gestartet und der erste zugehörige Startmesswert S_{M} = M_{O} wird aufgenommen. Es folgt eine erste Dosiermengenänderung ΔDᵢ. Eine durch diese Dosiermengenänderung induzierte Messwertänderung ΔMᵢ wird erfasst und analysiert, wobei das Ergebnis der Analyse dieser Messwertänderung über die weitere Vorgehensweise entscheidet.

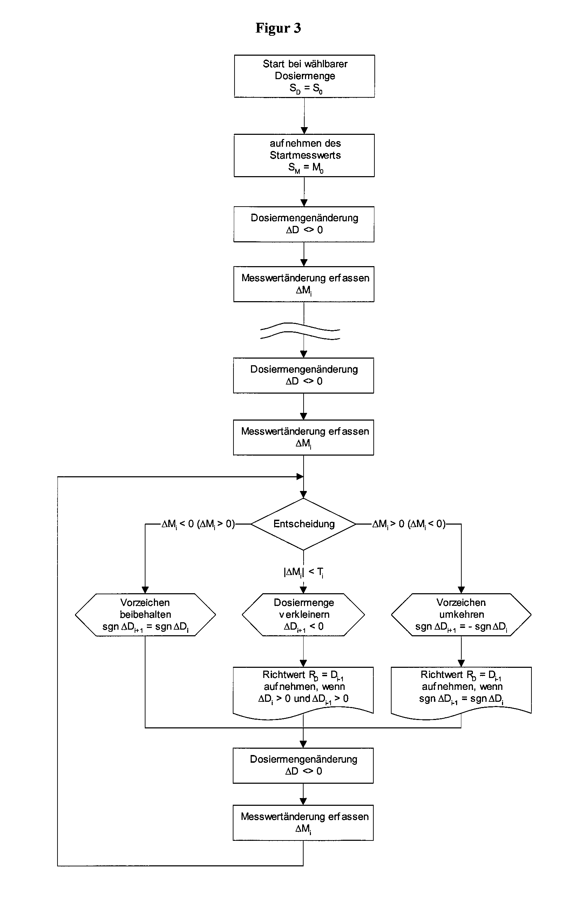

Grundsätzlich kann das Verfahren an dieser Stelle auf drei verschiedene Arten fortgeführt werden. Der linke Ast des in Figur 3 dargestellten Fließbildes der Steuerung greift in die Steuerung in der Art ein, dass vorgegeben wird, der folgenden vorzunehmenden Dosiermengenänderung ΔDᵢ₊₁ das gleiche Vorzeichen zu geben wie der vorherigen Dosiermengenänderung ΔDᵢ. Es wird also die Anweisung ausgegeben, die Dosiermenge in gleicher Richtung zu ändern.

Der rechte Ast des Fließbildes der Steuerung greift in die Steuerung in der Art ein, dass vorgegeben wird, dass die folgende vorzunehmende Dosiermengenänderung ΔDᵢ₊₁ das entgegengesetzte Vorzeichen der vorherigen Dosiermengenänderung ΔDᵢ erhält.

Der mittlere Ast wird nur beschritten, falls der Betrag der Messwertänderung ΔMᵢ kleiner einer vorgegebenen Toleranz Tᵢ ist. In diesem Fall erhält die nachfolgende vorzunehmende Dosiermengenänderung ΔDᵢ₊₁ stets ein negatives Vorzeichen.

Die durch die Dosiermengenänderung ΔDᵢ₊₁ verursachte Messwertänderung ΔMᵢ₊₁ wird wieder erfasst. Das beschriebene Prozedere wird nach einer vorgebbaren Taktzeit Δtᵢ mit einer vorgebbaren Dosiermengenänderung ΔDᵢ erneut durchlaufen.

Ein Wechseln und ein Beibehalten des Vorzeichens der Dosiermengenänderung werden in Figur 3 formelmäßig durch die Signumfunktion - Abkürzung sgn - angegeben.

Vor allem bei komplexeren Aufbereitungsprozessen stellt sich die strenge Periodizität der Algorithmen als nachteilig heraus. Beispielsweise gibt es Aufbereitungssysteme, die sehr empfindlich auf eine Unterdosierung der Aufbereitungschemikalien reagieren. Dies kann teilweise zu einer Notabschaltung des Systems führen, wenn nicht in gesonderter Weise auf diese Unterdosierung reagiert wird.

Vor diesem Hintergrund ist es Aufgabe der Erfindung, ein Verfahren zur Steuerung der optimalen Dosiermenge von Aufbereitungschemikalien Dₒₚₜ bei der Behandlung von kontinuierlich strömenden, zu behandelnden Fluiden bereit zu stellen, das im Gegensatz zum oben beschriebenen Verfahren einen oder mehrere "nicht periodische" Verfahrensschritte beinhalten kann, mit deren Hilfe auf außergewöhnliche Verhaltensweisen von Aufbereitungsprozessen und/oder -anlagen reagiert werden kann. Außerdem soll die Möglichkeit eröffnet werden, die Toleranz Tᵢ = 0 setzen zu können.

Gelöst wird diese Aufgabe durch ein Verfahren zur Steuerung der optimalen Dosiermenge Dₒₚₜ, bei dem zu Beginn des Verfahrens der Steuerung vorgegeben wird, ob der maximale bzw. der minimale Messwert Mₘₐₓ bzw. Mₘᵢₙ als Richtwert R_{M} = f(R_{D}) für die optimale Dosiermenge Dₒₚₜ = R_{D} zugrunde gelegt werden soll und mit einer Dosiermenge S_{D} = D_{O} gestartet und der erste zugehörige Startmesswert S_{M} = M_{O} aufgenommen wird und eine erste Dosiermengenänderung ΔDᵢ und die Analyse der durch diese Dosiermengenänderung induzierten Messwertänderung ΔMᵢ vorgenommen wird und das Ergebnis der Analyse dieser Messwertänderung über die weitere Vorgehensweise entscheidet und die Dosiermenge D periodisch im Abstand einer vorgebbaren Taktzeit Δtᵢ um eine vorgebbare Dosiermengenänderung ΔDᵢ verändert wird, wobei eine Toleranz Tᵢ vorgegeben wird und in dem Fall, dass der Betrag der Messwertänderung |ΔMᵢ| < Tᵢ ist, die folgende Dosiermengenänderung ΔDᵢ₊₁ < 0 ist und falls Mₘₐₓ als Richtwert R_{M} = f (R_{D}) zugrunde gelegt wird, bei einer positiven Messwertänderung ΔMᵢ der folgenden vorzunehmenden Dosiermengenänderung ΔDᵢ₊₁ das gleiche Vorzeichen zugeordnet wird wie der vorherigen Dosiermengenänderung ΔDᵢ und falls Mₘᵢₙ als Richtwert R_{M} = f (R_{D}) zugrunde gelegt wird, bei einer negativen Messwertänderung ΔMᵢ der folgenden vorzunehmenden Dosiermengenänderung ΔDᵢ₊₁ das gleiche Vorzeichen zugeordnet wird wie der vorherigen Dosiermengenänderung ΔDᵢ,
dadurch gekennzeichnet, dass
- falls Mₘₐₓ als Richtwert R_{M} = f (R_{D}) zugrunde gelegt wird, bei einer negativen Messwertänderung ΔMᵢ oder einer Messwertänderung ΔMᵢ = 0, der folgenden vorzunehmenden Dosiermengenänderung ΔDᵢ₊₁ das entgegengesetzte Vorzeichen zugeordnet wird wie der vorherigen Dosiermengenänderung ΔDᵢ,
- falls Mₘᵢₙ als Richtwert R_{M} = f (R_{D}) zugrunde gelegt wird, bei einer positiven Messwertänderung ΔMᵢ oder einer Messwertänderung ΔMᵢ = 0, der folgenden vorzunehmenden Dosiermengenänderung ΔDᵢ₊₁ das entgegengesetzte Vorzeichen zugeordnet wird wie der vorherigen Dosiermengenänderung ΔDᵢ,
- die periodische Abarbeitung der Algorithmen des Verfahrens wahlweise bei Erreichung bestimmter Unterbrechungskriterien unterbrochen werden kann, nämlich wenn unzulässig hohe, vorgebbare absolute Messwertebeträge |Mₘₐₓ| auftreten und/oder eine Messwertänderung ΔM unzulässige, vorgebbare Werte überschreitet und/oder eine vorgebbare Anzahl gleichgerichteter Dosierschritte überschritten wird und/oder eine vorgebbare Anzahl der Richtungsumkehren der Dosierschritte überschritten wird und/oder die Dosiermengengrenzen Dₘᵢₙ und/oder Dₘₐₓ erreicht werden, und
- nach der Unterbrechung der periodischen Algorithmen einer oder mehrere der Parameter Startdosiermenge D_{Start}, Dosierschrittweite ΔDᵢ, maximale Dosiermenge Dₘₐₓ, minimale Dosiermenge Dₘᵢₙ, Taktzeit Δtᵢ, Toleranz Tᵢ geändert werden können (nicht-periodische Abarbeitung) und
- die periodische Abarbeitung an beliebiger Stelle wieder fortgeführt werden kann und/oder
- die periodische Abarbeitung beendet werden kann.

Bei bestimmten Anwendungen ist es sinnvoll, die Toleranz Tᵢ = 0 zu setzen. Dadurch ist die Bedingung des mittleren Astes des Fließschemas |ΔMᵢ| < Tᵢ (= 0) nicht definiert. In den Algorithmen aus EP00943723.7 (siehe Figur 3) befindet sich weder im linken noch im rechten Ast des Fließschemas ein Gleichheitszeichen, so dass der Fall ΔMᵢ = 0 in keinem der drei Äste des Fließschemas definiert ist.

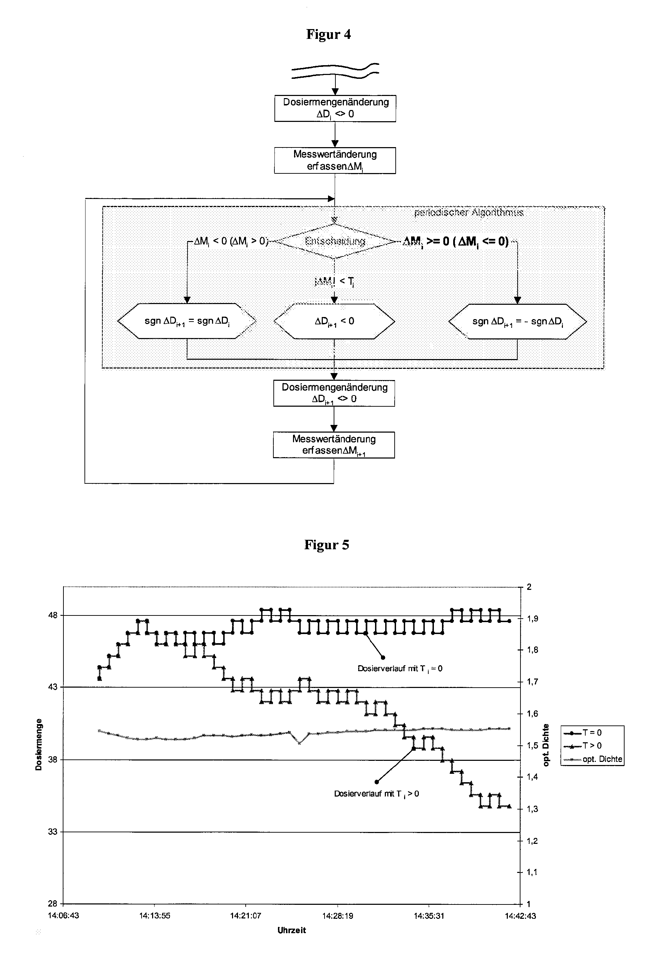

Nach den erfindungsgemäß vorgeschlagenen Algorithmen (Figur 4) ist auch der Fall Tᵢ = 0 eindeutig definiert und es wird im Fall ΔMᵢ = 0 der rechte Ast der Algorithmen beschritten und die Dosiermengenänderung umgekehrt (sgn(ΔDᵢ₊₁) = - sgn(ΔDᵢ)).

In Figur 5 ist das unterschiedliche Dosierverhalten für eine vorgegebene Toleranz Tᵢ > 0 einerseits und eine vorgegebene Toleranz Tᵢ = 0 andererseits für einen Anwendungsfall mit sehr geringen korrespondierenden Messwertänderungen dargestellt. Es sind die optische Dichte als Messwert und die Dosiermenge über der Zeit aufgetragen.

Beide Algorithmen verhalten sich gleich, solange der Betrag der Messwertänderung |ΔMᵢ| größer als die vorgegebene Toleranz Tᵢ ist. Ein unterschiedliches Dosierverhalten tritt erst auf, wenn der Betrag der resultierenden Messwertänderung |ΔMᵢ| = 0 ist.

Bei vorgegebener Toleranz Tᵢ > 0 wird für den Fall |ΔMᵢ| = 0 < Tᵢ immer der mittlere Ast des Fließschemas beschritten (ΔDᵢ < 0). Bei vorgegebener Toleranz Tᵢ = 0, wird für den Fall |ΔMᵢ| = 0 der rechte Ast des Fließschemas beschritten und die Richtung der Dosiermengenänderung umgekehrt (sgn(ΔDᵢ₊₁) = - sgn(ΔDᵢ)).

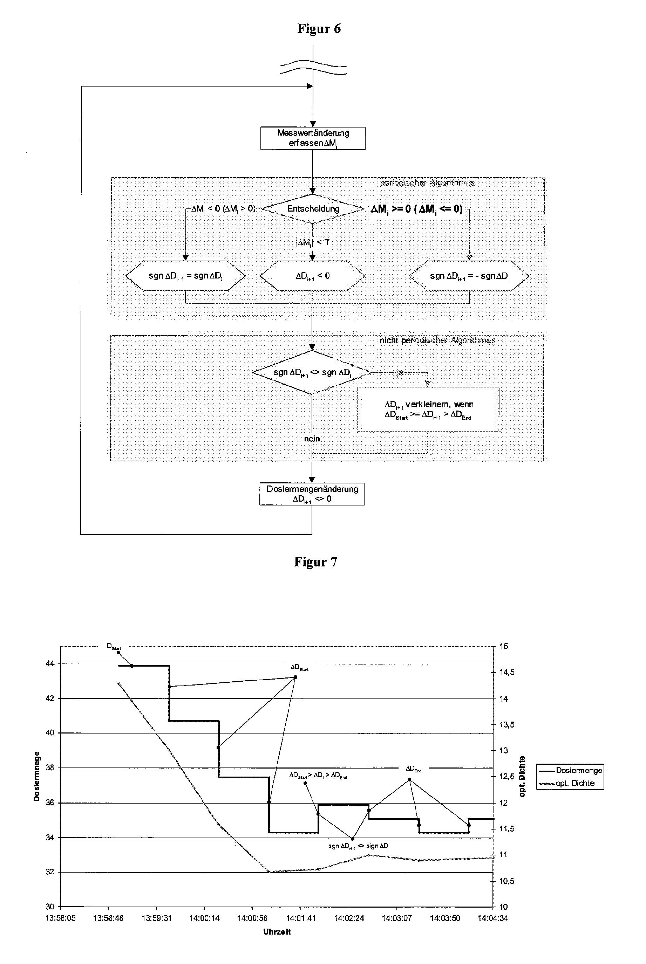

In Figur 6 ist zunächst das Fließbild für ein Beispiel mit einer Unterbrechung der periodischen Algorithmen durch einen "nicht periodischen" Verfahrensschritt und die in diesem Schritt vorgenommene Änderung eines Parameters (hier die Dosierschrittweite ΔDᵢ) dargestellt. Solange die Bedingung sgn(ΔDᵢ₊₁) = sgn(ΔDᵢ) erfüllt ist, werden die Algorithmen nach Stand der Technik streng periodisch abgearbeitet. Nur dann, wenn eine Richtungsumkehr der Dosiermengenänderung sgn(ΔDᵢ₊₁) <> sgn(ΔDᵢ) in den periodischen Algorithmen ermittelt wird, wird die periodische Abarbeitung unterbrochen und ein "nicht periodischer" Verfahrensschritt bearbeitet. In diesem Beispiel wird im "nicht periodischen" Verfahrensschritt die Dosierschrittweite ΔDᵢ reduziert. Das vorteilhafte Verhalten dieses nicht periodischen Algorithmus soll anhand eines Anwendungsbeispiels gemäß Figur 7 erläutert werden:

Ölhaltiges Retentat aus dem Vorlagebehälter einer Ultrafiltrationsanlage wird immer dann abgepumpt und während des Abpumpens kontinuierlich mit organischen Demulgatoren behandelt, wenn die Reststoffe im Retentat unzulässige Werte erreichen.

Die optimale Dosiermenge ist zu Anfang des Prozesses nicht bekannt und sie kann bei jedem neuen Abpumpen deutlich unterschiedliche Werte annehmen. Dadurch kann die Startdosiermenge D_{Start} erheblich außerhalb des optimalen Dosierbereichs liegen und es ist zwingend notwendig, möglichst schnell den optimalen Dosierbereich aufzufinden. Die Dosierung wird deshalb, ausgehend von D_{Start}, zunächst mit einer relativ großen, vorgebbaren Schrittweite ΔD_{Start} begonnen. Nach jeder Richtungsumkehr der Dosierschritte sgn(ΔDᵢ₊₁) <> sgn(ΔDᵢ) wird die Dosierschrittweite mit dem "nicht periodischen" Verfahrensschritt um vorgebbare Werte verkleinert (hier halbiert), bis eine vorgebbare Enddosierschrittweite ΔD_{End} erreicht ist. Danach arbeitet das System wieder streng periodisch nach dem Stand der Technik.

Somit wird das System sehr schnell kalibriert, auch dann, wenn die Startdosiermenge weit außerhalb der optimalen Dosiermenge liegt. Die Dosierschrittweite ist nach Erreichen des optimalen Dosierbereichs dennoch hinreichend klein, um genügend gute Aufbereitungsergebnisse zu erreichen.

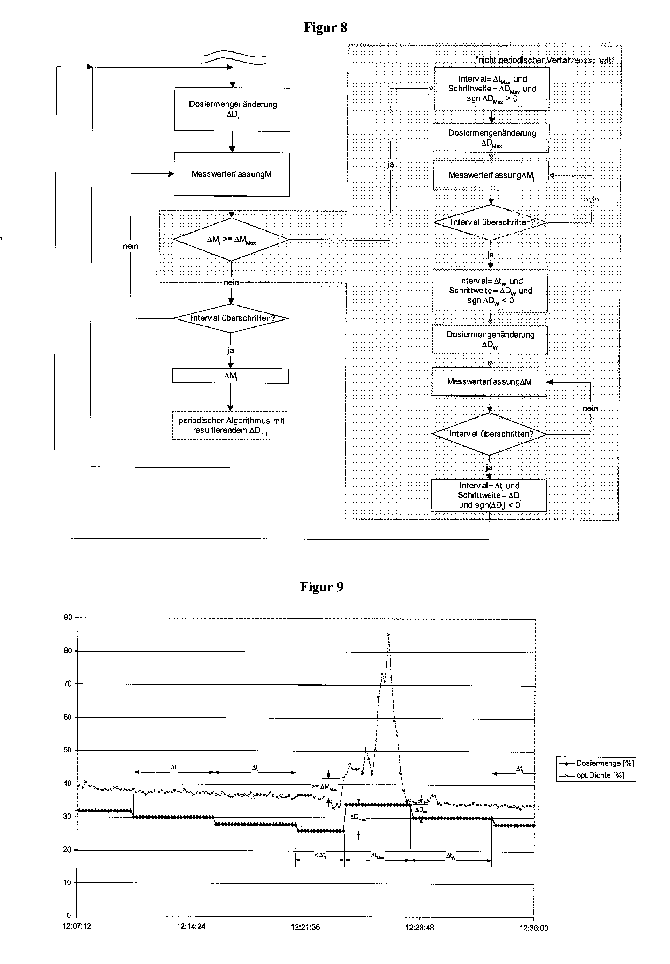

Ein Beispiel für einen die Aufbereitung positiv beeinflussenden Algorithmus ist im Fließbild in Figur 8 dargestellt.

Beim Betrieb von kontinuierlich arbeitenden Zentrifugen (Dekantern) zur Fest-Flüssig-Trennung mit Flockungshilfsmitteln (FHM) als Dosierchemikalie, lassen sich "nicht periodische" Verfahrensschritte besonders vorteilhaft einsetzen.

Im Gegensatz zu den oben beschriebenen Anwendungen wird in diesem Beispiel die Güte der mechanischen Abtrennung, d.h. die Qualität der abgetrennten Wasserphase am Austritt aus der Maschine vermessen. Dies ist bei kontinuierlich arbeitenden Zentrifugen möglich, da die Verweilzeit der Wasserphase in der Zentrifuge nur sehr kurz ist. Da die hier eingesetzten Zentrifugen im Allgemeinen über maschineninterne Regelungs- und Steuerungssysteme verfügen, die das Abtrennverhalten beeinflussen, ist das Aufbereitungsergebnis nicht mehr nur von der Zusammensetzung der zulaufenden Phase und der Dosiermenge der Aufbereitungschemikalie abhängig, sondern möglicherweise auch von den intern verstellten Maschinenparametern.

Gemessen wird die optische Dichte im Flüssigkeitsaustrag der Zentrifuge. Steuergröße ist die FHM-Dosiermenge vor der Zentrifuge. Die optische Dichte (Trübung) steigt sowohl bei einer Überdosierung der Aufbereitungschemikalie (Trübung durch überschüssige Chemie im Austrag) als auch bei Unterdosierung (Trübung durch nicht abgetrennte Feststoffpartikeln im Austrag) an. Es wird daher für das System eine Messwertfunktion mit Mₘᵢₙ als Richtwert R_{M} = f (R_{D}) zugrunde gelegt.

Die Dosiermenge wird (ausgehend von einer Überdosierung) periodisch solange reduziert, bis der Feststoffanteil im Austrag und damit die optische Dichte ansteigt (ΔMᵢ > 0), also eine Unterdosierung erreicht wird. Nach dem Stand der Technik folgt nun eine Richtungsumkehr der Dosiermengenänderung (sgn(ΔDᵢ₊₁) <> sgn(ΔDᵢ)).

Häufig reagieren solche Zentrifugen durch die maschineninterne Verstellung bestimmter Parameter mit einem nicht hinnehmbaren, massiven Anstieg des Feststoffgehalts im Flüssigaustrag, selbst wenn die optimale Dosiermenge nur minimal unterschritten wurde. Mit einer kurzzeitigen, aber deutlichen Überdosierung des Aufbereitungsmittels im Zulauf zur Zentrifuge kann der erhöhte Feststoffgehalt jedoch relativ schnell wieder reduziert werden. Diese kurzzeitige Überdosierung wird erfindungsgemäß durch einen "nicht periodischen" Verfahrensschritt nur dann ausgeführt, wenn der Feststoffgehalt im Flüssigkeitsaustritt der Zentrifuge unzulässig ansteigt.

Tritt innerhalb einer periodischen Taktzeit Δtᵢ ein unzulässiger Anstieg des Messwerts auf (ΔMⱼ >= ΔMₘₐₓ), so wird die periodische Abarbeitung der Steuerungsalgorithmen unterbrochen und ein die Aufbereitung positiv beeinflussender "nicht periodischer" Verfahrensschritt ausgeführt. Zunächst wird die Dosiermenge umgehend (d.h. es wird nicht bis zum Ende der periodischen Taktzeit Δtᵢ gewartet) für einen einstellbaren Zeitraum Δtₘₐₓ um einen einstellbaren Betrag ΔDₘₐₓ mit sgn (ΔDₘₐₓ > 0) erhöht. Damit wird der erhöhte Feststoffanteil im Austrag durch eine zeitlich befristete einstellbare Überdosierung möglichst schnell reduziert. Die Länge des Zeitraums Δtₘₐₓ und die Größe des Betrags ΔDₘₐₓ sind individuell von den eingesetzten Maschinen, den Eigenschaften der aufzubereitenden Fluide und den Eigenschaften der eingesetzten FHM abhängig.

Ist die Taktzeit Δtₘₐₓ abgelaufen, wird die Dosiermenge wieder um einen einstellbaren Betrag ΔD_{W} mit sgn (ΔD_{W} < 0) für eine Taktzeit Δt_{W} erniedrigt und zwar vorteilhaft so, dass die nun eingestellte resultierende Dosiermenge D_{W} größer ist als die Menge, bei der die unzulässige Erhöhung des Feststoffaustrags auftrat (|ΔD_{W}| < |ΔDₘₐₓ|). Die Rücknahme der Dosiermenge beendet somit die zeitlich befristete Überdosierung und stellt eine Dosiermenge ein, mit der gerade noch gute Aufbereitungsergebnisse erzielt werden.

Ist die Taktzeit Δt_{W} abgelaufen, wird die Abarbeitung der periodischen Algorithmen mit den Parametern Δtᵢ, ΔDᵢ und sgn(ΔDᵢ < 0) wieder gestartet.

In Figur 9 sind die optische Dichte als Messwert und die Dosiermenge für dieses Beispiel über der Zeit aufgetragen. Nur nach dem Auftreten eines unzulässigen Anstiegs des Messwerts ΔMₘₐₓ wird mit Hilfe des "nicht periodischen" Verfahrensschritts (kurzzeitige Überdosierung und Rücknahme der Überdosierung auf eine sinnvolle Dosiermenge) der unzulässig hohe Feststoffanteil im Flüssigkeitsaustrag rasch reduziert. Mit dem "nicht periodischen" Verfahrensschritt wird die streng periodische Abarbeitung unterbrochen und die Aufbereitung durch Änderung der Taktzeit Δt, der Dosierschrittweite ΔD und der Richtung der Dosiermengenänderung sgn(ΔD) positiv beeinflusst.

Unter der vorstehend erwähnten periodischen Abarbeitung wird die Veränderung von Parametern in fest vorgegebene Zeiteinheiten (Taktzeiten) verstanden.

Unter nicht-periodischer Abarbeitung wird die Veränderung von Parametern in veränderlichen Zeiteinheiten verstanden, wobei die Veränderung der Zeiteinheiten abhängig ist vom Erreichen bestimmter Unterbrechungskriterien.

## Patentansprüche

1. Verfahren zur Steuerung der optimalen Dosiermenge Dₒₚₜ, bei dem zu Beginn des Verfahrens der Steuerung vorgegeben wird, ob der maximale bzw. der minimale Messwert Mₘₐₓ bzw. Mₘᵢₙ als Richtwert R_{M} = f(R_{D}) für die optimale Dosiermenge Dₒₚₜ = R_{D} zugrunde gelegt werden soll und mit einer Dosiermenge S_{D} = D_{O} gestartet und der erste zugehörige Startmesswert S_{M} = M_{O} aufgenommen wird und eine erste Dosiermengenänderung ΔDᵢ und die Analyse der durch diese Dosiermengenänderung induzierten Messwertänderung ΔMᵢ vorgenommen wird und das Ergebnis der Analyse dieser Messwertänderung über die weitere Vorgehensweise entscheidet und die Dosiermenge D periodisch im Abstand einer vorgebbaren Taktzeit Δtᵢ um eine vorgebbare Dosiermengenänderung ΔDᵢ verändert wird, wobei eine Toleranz Tᵢ vorgegeben wird und in dem Fall, dass der Betrag der Messwertänderung |ΔMᵢ| < Tᵢ ist, die folgende Dosiermengenänderung ΔDᵢ₊₁ < 0 ist und falls Mₘₐₓ als Richtwert R_{M} = f (R_{D}) zugrunde gelegt wird, bei einer positiven Messwertänderung ΔMᵢ der folgenden vorzunehmenden Dosiermengenänderung ΔDᵢ₊₁ das gleiche Vorzeichen zugeordnet wird wie der vorherigen Dosiermengenänderung ΔDᵢ und falls Mₘᵢₙ als Richtwert R_{M} = f (R_{D}) zugrunde gelegt wird, bei einer negativen Messwertänderung ΔMᵢ der folgenden vorzunehmenden Dosiermengenänderung ΔDᵢ₊₁ das gleiche Vorzeichen zugeordnet wird wie der vorherigen Dosiermengenänderung ΔDᵢ,
**dadurch gekennzeichnet, dass**
- falls Mₘₐₓ als Richtwert R_{M} = f (R_{D}) zugrunde gelegt wird, bei einer negativen Messwertänderung ΔMᵢ oder einer Messwertänderung ΔMᵢ=0, der folgenden vorzunehmenden Dosiermengenänderung ΔDᵢ₊₁ das entgegengesetzte Vorzeichen zugeordnet wird wie der vorherigen Dosiermengenänderung ΔDᵢ,
- falls Mₘᵢₙ als Richtwert R_{M} = f (R_{D}) zugrunde gelegt wird, bei einer positiven Messwertänderung ΔMᵢ oder einer Messwertänderung ΔMᵢ = 0, der folgenden vorzunehmenden Dosiermengenänderung ΔDᵢ₊₁ das entgegengesetzte Vorzeichen zugeordnet wird wie der vorherigen Dosiermengenänderung ΔDᵢ,
- die periodische Abarbeitung der Algorithmen des Verfahrens wahlweise bei Erreichung bestimmter Unterbrechungskriterien unterbrochen werden kann, nämlich wenn unzulässig hohe, vorgebbare absolute Messwertebeträge |Mₘₐₓ| auftreten und/oder eine Messwertänderung ΔM unzulässige, vorgebbare Werte überschreitet und/oder eine vorgebbare Anzahl gleichgerichteter Dosierschritte überschritten wird und/oder eine vorgebbare Anzahl der Richtungsumkehren der Dosierschritte überschritten wird und/oder die Dosiermengengrenzen Dₘᵢₙ und/oder Dₘₐₓ erreicht werden, und
- nach der Unterbrechung der periodischen Algorithmen einer oder mehrere der Parameter Startdosiermenge D_{Start}, Dosierschrittweite ΔDᵢ, maximale Dosiermenge Dₘₐₓ, minimale Dosiermenge Dₘᵢₙ, Taktzeit Δtᵢ, Toleranz Tᵢ geändert werden können (nicht-periodische Abarbeitung) und
- die periodische Abarbeitung an beliebiger Stelle wieder fortgeführt werden kann und/oder
- die periodische Abarbeitung beendet werden kann.

2. Verfahren nach Anspruch 1, weiterhin **dadurch gekennzeichnet, dass** nach der Unterbrechung der periodischen Abarbeitung der Algorithmen einer oder mehrere der Parameter: unzulässig hohe, vorgebbare absolute Meßwertbeträge |Mₘₐₓ| und/oder unzulässige, vorgebbare Werte einer Meßwertänderung ΔM und/oder eine vorgebbare Anzahl gleichgerichteter Dosierschritte und/oder eine vorgebbare Anzahl der Richtungsumkehren der Dosierschritte und/oder die Dosiermengengrenzen Dₘᵢₙ und/oder Dₘₐₓ geändert werden können.
